# EUROPÄISCHE PATENTSCHRIFT

(11) **EP 0 858 484 B1**
(45) Veröffentlichungstag und Bekanntmachung des Hinweises auf die Patenterteilung: **06.05.1999**
(21) Anmeldenummer: 96934781.4
(22) Anmeldetag: 22.10.1996
(51) Int. Cl.: C08L 77/00, C08L 77/12, C08L 79/08, C08L 75/00, C08L 77/02, C08L 77/06

(54) **VERWENDUNG VON POLY(METH)ACRYLSÄUREN ALS VERZWEIGER**
USE OF POLY(METH)ACRYLIC ACIDS AS BRANCHING AGENTS
UTILISATION D'ACIDES POLY(METH)ACRYLIQUES COMME AGENTS DE RAMIFICATION

(30) Priorität: 31.10.1995 DE 19540555
(43) Veröffentlichungstag der Anmeldung: 19.08.1998
(73) Patentinhaber: BASF AKTIENGESELLSCHAFT, 67056 Ludwigshafen (DE)
(72) Erfinder: GLÜCK, Alexander, D-67251 Freinsheim (DE); GÖTZ, Walter, D-67067 Ludwigshafen (DE); LEY, Gregor, D-67319 Wattenheim (DE)
(86) Internationale Anmeldenummer: EP9604582
(87) Internationale Veröffentlichungsnummer: WO9716490

(56) Entgegenhaltungen:
- EP-A- 0 096 264
- EP-A- 0 176 978
- EP-A- 0 495 363
- EP-A- 0 495 368
- EP-A- 0 651 018
- WO-A-90/07555
- WO-A-90/07556
- PATENT ABSTRACTS OF JAPAN vol. 006, no. 054 (C-097) 9. April 1982 & JP,A,56 167 750 (ASAHI CHEM IND CO LTD) 23. Dezember 1981

## Beschreibung

Die Erfindung betrifft die Verwendung von Homo- oder Copolymeren A, aufgebaut aus
A₁) 40 - 100 Gew.-% Monomeren der allgemeinen Formel I 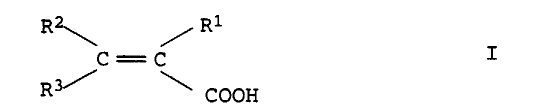
A₂) 0 - 60 Gew.-% Monomeren der allgemeinen Formel II 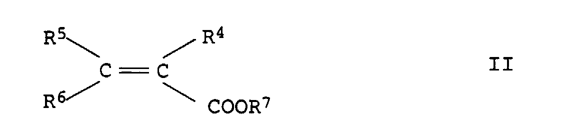 und
A₃) 0 - 10 Gew.-% weiteren radikalisch polymerisierbaren Monomeren,
wobei die Gewichtsprozente der Monomeren A₁) bis A₃) 100 % ergeben und die Substituenten folgende Bedeutung haben:
- R¹,R⁴: gleiche oder verschiedene Reste Wasserstoff oder C₁ bis C₄ Alkyl,
- R²,R³,R⁵,R⁶: gleiche oder verschiedene Reste Wasserstoff oder C₁-bis C₄-Alkyl,
mit der Maßgabe, daß mindestens zwei Reste aus der Gruppe R¹, R², R³ und der Gruppe R⁴, R⁵, R⁶ Wasserstoff sind,
- R⁷: ein Alkyl-, Cycloalkyl-, Aryl- oder Aralkylrest bedeutet
als Verzweiger für Aminogruppen enthaltende thermoplastische Polymere.

Weiterhin betrifft die Erfindung thermoplastische Polyamidformmassen, die die erfindungsgemäßen Verzweiger enthalten, Verfahren zur Herstellung der Formmassen, deren Verwendung zur Herstellung von Formkörpern jeglicher Art und die hierbei erhältlichen Formkörper.

Polyacrylsäuren bzw. Polymethacrylsäuren sind seit langem bekannt und im Handel u.a. als Sokalan® (BASF AG) erhältlich. Diese Polymeren werden üblicherweise als Additive für phosphorreduzierte und phosphatfreie Wasch- und Reinigungsmittel oder als Dispergierhilfen für Feststoffe (z.B. Belagsverhinderung bei der Wasserbehandlung) verwendet.

Geeignete Polymer-Zusammensetzungen, die zur Herstellung von Hohlkörpern durch Extrusionsblasformen eingesetzt werden können, erfordern u.a. bei Polyamiden hohe Molekulargewichte.

Beim Blasformen wird allgemein ein Schlauch aus Polymerschmelze extrudiert, der zwischen den beiden Halbschalen des geöffneten Werkzeuges hängt. Anschließend wird das Werkzeug geschlossen und der Polymerschlauch durch Gas-Innendruck gegen das Werkzeug gepreßt, abgekühlt und entformt.

Wesentliche Voraussetzung bei dieser Verarbeitung ist, daß der Polymerschlauch beim Extrudieren in den Zeiträumen, wo er frei zwischen den Werkzeugen hängt, nicht abreißt, so daß der Formungsvorgang zu Ende geführt werden kann. Wünschenswert ist darüberhinaus auch, daß der Schlauch nicht "durchhängt", da hierbei geringe Wandstärken in der oberen Hälfte und dickere Wandstärken in der unteren Hälfte entstehen. Hohlkörper mit unterschiedlichen Wandstärken sind zur Verwendung nicht geeignet, da die Belastbarkeit in der Regel von der Stelle mit der geringsten Wandstärke begrenzt wird.

Besonders problematisch ist die Gefahr eines Schmelzebruchs bzw. Durchhängens bei glasfaserverstärkten Polymerschmelzen, da diese eine hohe Dichte (und dadurch eine hohe Zugkraft auf den oberen Teil des Polymerschlauches) aufweisen und gleichzeitig die maximale Dehnbarkeit der Polymerschmelze vor dem Bruch bei diesen verstärkten Massen geringer ist.

Beide Faktoren werden von der sog. Schmelzesteifigkeit, die in erster Linie von der Schmelzeviskosität abhängt, bestimmt. Ideal wäre eine hohe Schmelzviskosität bei geringer Scherung - d.h. nach der Extrusion - aber eine niedrige Schmelzviskosität unter hohem Schergefälle - d.h. im Verarbeitungsextruder.

Diese hohe Schmelzviskosität kann u.a. dadurch erzielt werden, das z.B. Polyamide, insbesondere mit den gewünschten Additiven auf einem Extruder konfektioniert werden und anschließend in der Festphase thermisch nachbehandelt werden (Temperverfahren), bis das gewünschte Molekulargewicht erreicht ist. Dies Verfahren ist z.B. aus der EP-A 589 349 bekannt. Nachteilig bei diesem Verfahren ist die lange Reaktionszeit, d.h. das Verfahren ist sehr zeitaufwendig und somit teuer.

Ein anderes Verfahren zur Erzielung hoher Schmelzviskositäten ist die Konfektionierung mit einem hoch reaktiven Verzweiger wie aus den EP-A 495 363, EP-A 495 368, EP-A 452 305 und EP-A 452 306 bekannt ist. Die eingesetzten Styrol/Maleinsäureanhydrid-Copolymeren zeigen jedoch eine mangelhafte Dispergierung im Polymeren, so daß von Granulatkorn zu Granulatkorn sehr schwankende Viskositäten vorliegen, die zu einer schlechten Verarbeitbarkeit sowie mangelhaften Blasformkörpern führen.

Ein weiteres Problem besteht darin, daß Polyamidfasern in erheblichen Mengen aus solchen Polyamiden hergestellt werden, deren Molekulargewicht unterhalb des für technische Formmassen üblichen liegt. Dabei kommen Polyamide mit Viskositätszahlen von 115-140 ml/g zum Einsatz, während für technische Formmassen Viskositätszahlen von >135 ml/g notwendig sind. Da die Herstellung von Polyamidfasern sehr hohe Reinheitsanforderungen an die verwendeten Polyamide stellt, besteht die Notwendigkeit, Verwendungsmöglichkeiten für solche Polyamide zu finden, die aufgrund von Verunreinigungen diese Anforderungen nicht erfüllen. Dies gilt ebenso für Zwischenläufe, die bei Produktumstellungen kontinuierlicher Produktionsanlagen in erheblichen Mengen anfallen. Ferner besteht Bedarf an Verwendungsmöglichkeiten für bereits gesponnene Polyamidfasern, die aufgrund von Qualitätsmängeln nicht zur Verwendung textiler Gebilde eingesetzt werden können. Hier sind vor allem teilgefüllte Faserspulen zu nennen, wie sie bei durch Düsenverstopfungen verursachten Unterbrechungen des Spinnvorgangs sowie bei Produktwechseln anfallen.

Während relativ hochviskose Abfälle der genannten Art ohne Probleme zu technischen Formmassen weiterverarbeitet werden können, ist dies für die niederviskosen Faserabfälle mit Viskositätszahlen von 115 - 130 ml/g nicht ohne weiteres möglich, da ihr Molekulargewicht zu gering ist, was zu schlechten mechanischen Eigenschaften führt.

Der vorliegenden Erfindung lag daher die Aufgabe zugrunde, einen geeigneten Verzweiger zur Schmelze-Viskositätserhöhung von Aminogruppen enthaltenden Polymeren zu finden, der sich gut im Polymeren dispergieren läßt und somit homogene Polymermischungen, insbesondere mit Polyamiden liefert.

Die Polymermischungen sollen eine hohe Schmelzviskosität aufweisen, so daß eine problemlose Verarbeitung zu Blasformkörpern möglich ist. Insbesondere soll eine Verarbeitung zu Formkörpern mit großem Volumen und gleichmäßiger Wandstärke ermöglicht werden.

Insbesondere soll die Verarbeitung bei der dreidimensionalen Extrusion (sog. butzenarmes Blasformen) ermöglicht werden, wie es in den DE-A 29 27 098, DE-A 31 15 306 und EP-A 256 442 beschrieben wird.

Erfindungsgemäß wird diese Aufgabe durch die Verwendung der eingangs definierten Homo- oder Copolymeren A) (Verzweiger) gelöst.

Bevorzugte Ausführungsformen der Verwendung sind den Unteransprüchen zu entnehmen.

Überraschenderweise wurde gefunden, daß die Verzweiger A) gemäß Anspruch 1 die Schmelzeviskosität von Aminogruppen enthaltenden Polymeren, insbesondere von Polyamiden in geeigneter Weise erhöht, so daß die vorstehenden Nachteile vermieden werden.

Insbesondere zeigen die erfindungsgemäßen Polyamidformmassen eine hohe Schmelzeviskosität, die in kurzer Zeit mit üblicher Extruderkonfektionierung erzielt werden kann. Ferner wurde gefunden, daß die erfindungsgemäßen Verzweiger geeignet sind, die Viskosität von Polyamiden mit niedrigen Molekulargewichten, wie sie im Faserbereich üblich sind, soweit zu erhöhen, daß die daraus hergestellten erfindungsgemäßen Formmassen für die Spritzgußverarbeitung zu technischen Teilen geeignet sind.

Bevorzugte Verfahren zur Herstellung und die Verwendung der erfindungsgemäßen Polyamidformmassen sind den Unteransprüchen zu entnehmen.

Die erfindungsgemäß als Vernetzer verwendbaren Homo- oder Copolymeren A) sind aufgebaut aus:
A₁) 40 bis 100, bevorzugt 80 bis 100 Gew.-% Monomeren der allgemeinen Formel I 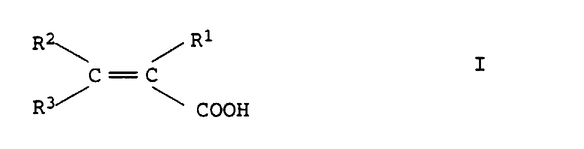
A₂) 0 bis 60, bevorzugt 0 bis 20 Gew.-% Monomeren der allgemeinen Formel II 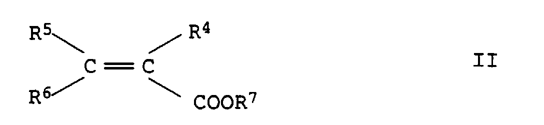 und
A₃) 0 bis 10 Gew.-%, bevorzugt 0 bis 5 Gew.-% weiteren radikalisch polymerisierbaren Monomeren,
wobei die Gewichtsprozente der Monomeren A₁) bis A₃) 100 % ergeben und die Substituenten folgende Bedeutung haben:
- R¹,R⁴: gleiche oder verschiedene Reste Wasserstoff oder C₁ bis C₄ Alkyl, bevorzugt Wasserstoff oder ein Methylrest, insbesondere Wasserstoff,
- R²,R³,R⁵,R⁶: gleiche oder verschiedene Reste Wasserstoff oder C₁ bis C₄-Alkyl, bevorzugt Wasserstoff
mit der Maßgabe, daß mindestens zwei Reste aus der Gruppe R¹, R², R³ und der Gruppe R⁴, R⁵, R⁶ Wasserstoff sind, da ansonsten die Reaktivität in der radikalischen Polymerisation nicht mehr ausreichend gegeben ist,
- R⁷: ein Alkyl-, Cycloalkyl-, Aryl- oder Aralkyl, bevorzugt Ethyl-, Hexyl, Benzyl-, Toluyl-, wobei Methyl- und der Butylrest ganz besonders bevorzugt sind.

Es können auch Mischungen verschiedener Reste R⁷ bei den Monomeren A₂) eingesetzt werden.

Die Herstellung der Verzweiger A) erfolgt durch übliche Verfahren der radikalischen Lösungs- bzw. Dispersionspolymerisation durch Mischen der Monomeren mit Wasser sowie gegebenenfalls Dispergatoren und einem Initiator (Radikalbildner). Für nähere Einzelheiten sei an dieser Stelle auf B. Vollmert, Grundlagen der Makromolekularen Chemie, Karlsruhe 1979, Band 1, verwiesen.

Unter den weiteren radikalisch polymerisierbaren Monomeren A₃) sind solche zu verstehen, die unter den oben genannten Bedingungen mit den Monomeren A₁) und gegebenenfalls A₂) polymerisieren können. Als Beispiele seien Styrol, Butadien, Isopren oder Vinylacetat genannt.

Bevorzugte erfindungsgemäß verwendbare Vernetzer enthalten keine Monomeren A₃).

Das Molekulargewicht (Mₙ = Zahlenmittel) der Verzweiger beträgt im allgemeinen 4000 bis 200 000, bevorzugt 25 000 bis 100 000 g/mol, welches z.B. durch Lichtstreuung, GPC, Dampfdruckosmose oder sonstige übliche Bestimmungsmethoden wie in B. Vollmert, Grundlagen der Makromolekularen Chemie, Karlsruhe 1979, Band 3, beschrieben, ermittelt werden kann.

Als bevorzugte Verzweiger seien Polyacrylsäure, Polymethacrylsäure und Polymere aus Acrylsäure (A₁) mit Butylacrylat (A₂) sowie Methacrylsäure (A₁) mit Butylacrylat (A₂) genannt.

Unter Aminogruppen enthaltenden thermoplastischen Polymeren werden erfindungsgemäß solche Polymere verstanden, die in den Ketten freie NH₂ und/oder NH-Gruppen aufweisen, die mit der Säuregruppe des Verzweigers durch Aminbildung oder Umamidierung reagieren können. Als Beispiele seien Polyurethane, Polyetheramide, Polyesteramide, Polyimide und Polyamidimide genannt, wobei Polyamide, insbesondere Polyamid 6, bevorzugt sind.

Derartige Polymere und deren Verfahren zur Herstellung sind dem Fachmann bekannt, weshalb sich weitere Einzelheiten erübrigen.

Besonders bevorzugt sind erfindungsgemäße thermoplastische Formmassen, enthaltend
A) 0,01 bis 1 Gew.-%, bevorzugt 0,01 bis 0,5, insbesondere 0,01-0,05 Gew.-% Homo- oder Copolymere gemäß Anspruch 1,
B) 20 bis 99,99, bevorzugt 49,5 bis 99,99 Gew.-% eines thermoplastischen Polyamids
C) 0 bis 70, vorzugsweise 0 bis 50 Gew.-% weiterer Zusatzstoffe und Verarbeitungshilfsmittel,
wobei die Summe der Gewichtsprozente der Komponenten A) bis C) 100 % ergibt.

Als Komponente A) enthalten die erfindungsgemäßen Formmassen Homo- oder Copolymere A gemäß Anspruch 1 - wie vorstehend beschrieben.

Die Polyamide der erfindungsgemäßen Formmassen weisen im allgemeinen eine Viskositätszahl (VZ) nach ISO 307, bestimmt in einer 0,5 gew.-%-igen Lösung in 96 gew.%iger Schwefelsäure bei 25°C, von 130 bis 300 ml/g auf. Polyamide mit einer Viskositätszahl von 170 bis 250, insbesondere von 200 bis 240 werden bevorzugt verwendet (Blasformen). Für die Verarbeitung der Faserabfälle sind niedrigere Ausgangsviskositäten vorhanden, wobei nach der Umsetzung mit den erfindungsgemäßen Verzweigern Viskositätszahlen größer 130, bevorzugt größer 140 ml/g erzielt werden.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Als Beispiele für Copolyamide seien binäre und ternäre Copolymerisate aus Terephthalsäure, Isophthalsäure, Hexamethylendiamin und ε-Caprolactam genannt (PA6T/6, PA6T/66).

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Die Herstellung der bevorzugten teilaromatischen Copolyamide mit niedrigem Triamingehalt kann nach den in den EP-A 129 195 und 129 196 beschriebenen Verfahren erfolgen.

Als Komponente C) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Kautschuke (Zähmodifier), Keimbildungsmittel, Weichmacher usw. enthalten, deren Anteil in der Regel nicht mehr als 70 Gew.-% bevorzugt nicht mehr als 50 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt 20 bis 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylendistearylamid). Zur besseren Folienverarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für Polyamide bekannten Flammschutzmittel zugegeben werden, insbesondere solche auf Basis von Phosphorverbindungen bzw. roter Phosphor selbst.

Die erfindungsgemäß verwendbaren Homo- oder Copolymerisate A) zeigen eine ausreichende Reaktivität gegenüber Aminogruppen enthaltenden Polymeren, so daß die Zunahme der Schmelzviskosität (Verzweigung) in kürzerer Zeit erfolgen kann. Weiterhin lassen sich derartige Verzweiger gut im Polymeren dispergieren, so daß eine weitestgehend gleiche Viskosität von Granulatkorn zu Granulatkorn vorliegt.

Die Herstellung der erfindungsgemäßen thermoplastischen Formmassen ist an sich nicht kritisch, jedoch haben sich einige Verfahren als besonders geeignet erwiesen.

So kann beispielsweise aus den Komponenten B) sowie gegebenenfalls C), vorzugsweise auf einem Extruder, ein Granulat hergestellt werden. Auf dieses Granulat kann nun die Komponente A) als Pulver, Schmelze oder Lösung bzw. Dispersion aufgetragen werden und anschließend in üblicher Weise konfektioniert werden.

In einem weiteren bevorzugten Verfahren zur Herstellung der erfindungsgemäßen thermoplastischen Formmassen wird die Komponente A) mit der Schmelze der Komponente B) sowie gegebenenfalls C) gemischt. Hier haben sich vor allem Extruder, insbesondere Zweischneckenextruder bewährt. Die Mischung der Komponenten kann hierbei gemeinsam geschmolzen werden oder die Komponente A) in die Schmelze der Komponente B) sowie gegebenenfalls C) zugegeben werden. Die Verarbeitungstemperaturen liegen üblicherweise ca. 10 bis 50°C über dem Schmelzpunkt des verwendeten Polyamids (Komponente B). Bevorzugt werden die Produkte dann extrudiert und granuliert.

Bei diesem bevorzugten Verfahren ist es insbesondere von Vorteil, daß die verwendbaren Polymeren A) wasserlöslich bzw. wasserdispergierbar sind. Die Zugabe kann deshalb in Form einer wäßrigen Lösung bzw. Dispersion erfolgen, welche einen Feststoffgehalt von 10 - 70, bevorzugt 20 bis 60 und insbesondere 35 - 50 Gew.-% aufweisen. Auf diese Weise kann man auch bei sehr geringen Zugabemengen des Verzweigers A) eine ausreichende Dispergierung sowie eine sehr hohe Genauigkeit der gewünschten Dosiermenge (konstante Dosiermenge) erzielen.

Bevorzugt befindet sich am Verarbeitungsextruder nach der Zugabestelle für Komponente A) eine Entgasungsvorrichtung, welche bevorzugt einen Unterdruck erzeugt (kleiner 1 bar).

Die Schmelzviskosität der Formmassen ist soweit erhöht, daß sich Formkörper mit großen Volumina herstellen lassen, welche eine gleichmäßige Wandstärke über das gesamte Formteil aufweisen. Insbesondere werden hochmolekulare Formmassen zur Herstellung von Hohlkörpern durch das Extrusionsblasformen verwendet, da die Formmassen bei der Verarbeitung eine sehr hohe Viskosität ohne Scherung, aber eine geringe Viskosität mit Scherung zeigen.

Die erfindungsgemäßen Formmassen können besonders gut zur Herstellung komplexer, dreidimensional geformter Hohlkörper (z.B. stark gekrümmter Rohre) verwendet werden. Dabei wird der Vorformling - je nach Variante des Verfahrens - vor dem Schließen des Werkzeugs vorgeformt und dann erst um einen relativ geringen Faktor aufgeblasen. Das Vorformen des Vorformlings kann durch Manipulation mit Hilfe eines Roboters oder durch Ablage des Schlauches in einem gleichzeitig unter dem Extruder bewegten Werkzeug erfolgen. Dieses Verfahren führt zu erheblich geringeren Butzen-Abfällen beim Abquetschen (3D-Blasformen bzw. butzenarmes Blasformen).

Die Formmassen können auch als Komponente bei der Coextrusion bzw. sequentiellen Coextrusion verwendet werden.

Als Anwendungen seien insbesondere Blasformkörper, Coextrudate, Profilextrudate, Rohrextrudate, butzenarme 3D Extrudate wie Kraftstofftanks, Kraftstoffleitungen, Luftführungsrohre mit hoher Temperaturbelastung (z.B. Verbindungsrohre zwischen Turbolader, Ladeluftkühler und Motor bei Turbodiesel-Motoren), Kühlwasserführende Rohre und Behälter, Hydraulikölbehälter und Ölbehälter genannt. Vorteile sind die hohe Barrierewirkung gegen Kohlenwasserstoffe, die hohe Wärmeformbeständigkeit sowie die hohe Wärmealterungsbeständigkeit.

### Beispiele

### Komponente A

- A/1:: Polyacrylsäure mit einem mittleren Molekulargewicht (Mₙ) von 4000, 35%ige wäßrige Lösung. (Sokalan® CP10S der BASF AG)
- A/2:: Polyacrylsäure mit Mₙ von 80 000, 50 %ige wäßrige Lösung (Sokalan® PA 80 S der BASF AG)
- A/3:: Polyacrylsäure mit Mₙ von 110 000, 50 %ige wäßrige Lösung (Sokalan® PA 110 S der BASF AG)
- A/4:: Dispersionspolymerisat aus 40 Gew.-% Acrylsäure (A₁) und 60 Gew.-% n-Butylacrylat (A₂) mit einer mittleren Teilchengröße von 0,1 µm als 40 %ige wäßrige Dispersion. (Acronal® DS 3467X der BASF AG)
- A/1V: Copolymer aus Styrol/Maleinsäureanhydrid mit 16 Gew.-% Maleinsäureanhydrid (Dylarc® 332 der Arco Chem.)
- A/2V: Polyethylen mit 8 Gew.-% gepfropfter Acrylsäure (Polybond® 1009 der Uniroyal Chem.), MFI (190°C/2, 16 kg) von 22 g/10 min.

### Komponente B

- B/1: Poly-ε-Caprolactam (PA6) mit einer VZ von 195 ml/g (bestimmt gemäß ISO 307 als 0,5 %ige Lösung in 96 gew.-%iger Schwefelsäure); Ultramid® B 35 der BASF AG
- B/2: PA6 mit einer VZ von 250 ml/g; Ultramid® B4 der BASF AG
- B/3: PA6 mit einer VZ von 124 ml/g; Ultramid® BS 400 (Faserstandardprodukt)
- B/4: pelletisiert Faserabfälle aus PA6, buntgefärbt, mit einer VZ von 119 ml/g

### Komponente C

- C/1: Farbruß mit einer mittleren Primärteilchengröße von 0,4 µm
- C/2: Cu I/K I Komplex (Wärmestabilisator)
- C/3: Schnittglasfasern mit einer Faserlänge von 6 mm, Aminosilanschlichte

### Herstellung der Formmassen

Die Komponenten B wurden jeweils mit 0,5 Gew.-% C/1 sowie 200 ppm Cu, Komponente C/2, (Cu-Gehalt bezogen auf den Cu I/K I Komplex) in einem Zweischneckenextruder (ZSK 30 Werner & Pfleiderer) bei 290°C, 8 kg/h Durchsatz zu einer homogenen Schmelze verarbeitet. In diese Polymerschmelze wurde anschließend die jeweiligen Komponenten A) (Mengen, siehe Tabelle) zudosiert, homogenisiert, ausgetragen und granuliert.

Von allen Produkten wurden durch Einzelkorn-VZ-Messungen in Anlehnung an ISO 307, jedoch unter Einwaage eines einzelnen Granulatkorns pro Messung, mit einem Mikro-Viskosimeter die VZ (0,5%ige Lösung in 96 %iger Schwefelsäure) an jeweils 12 Granulatkornern bestimmt. Es wurden die minimalen und maximalen Werte als Maß für die Molekulargewichtsschwankungen im Produkt angegeben. Ferner wurde der MVR bei 250°C und 10 kg Auflagegewicht bestimmt.

Auf einer Extrusionsblasformmaschine (Fa. Voith) wurden bei 250°C Flaschen von 800 ml Volumen hergestellt. Das Gewicht der Blasformflaschen wurde ermittelt und die Verarbeitung visuell beurteilt.

Die Ergebnisse der Messungen und Zusammensetzungen der Formmassen sind der Tabelle 1 zu entnehmen.

In den Beispielen für Faserpolyamide (Komponente B/3 und B/4) wurde die VZ nach Konfektionierung bestimmt. Anschließend wurden auf einer Spritzgußmaschine Prüfkörper hergestellt und an diesen Normprüfkörpern die Zugfestigkeit gemäß ISO 527 und Schlagzähigkeit gemäß ISO 179 bestimmt.

Die Ergebnisse der Messungen und die Zusammensetzungen der Formmassen sind der Tabelle 2 zu entnehmen.

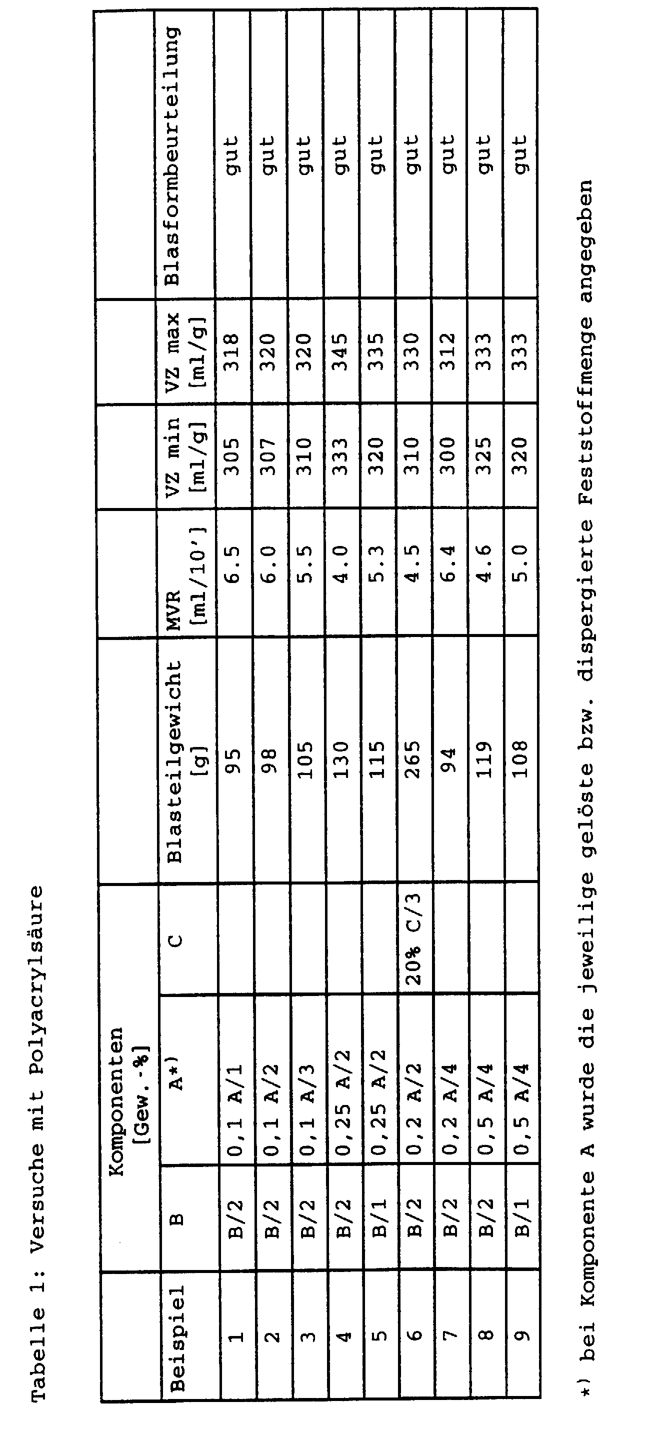

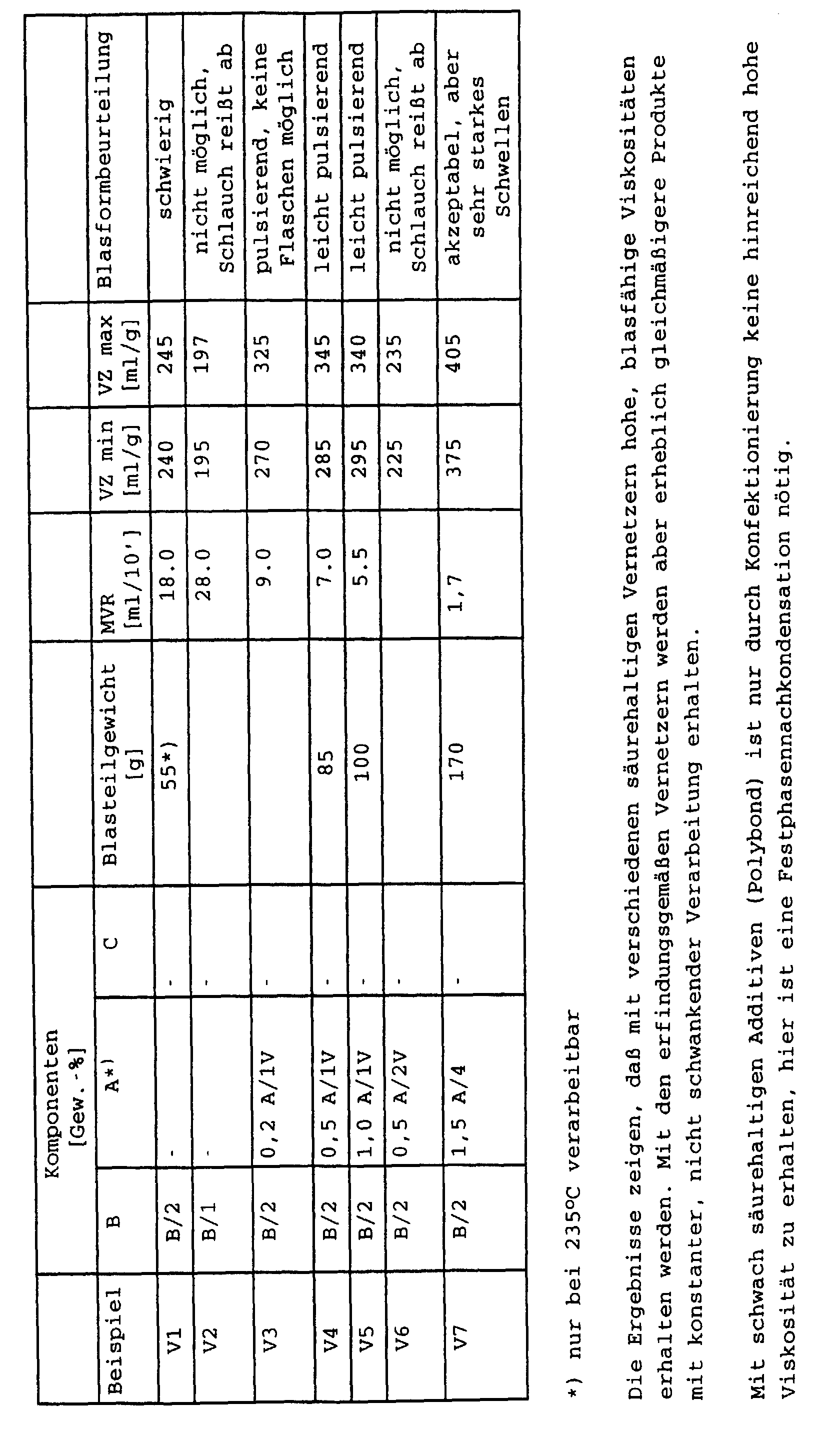

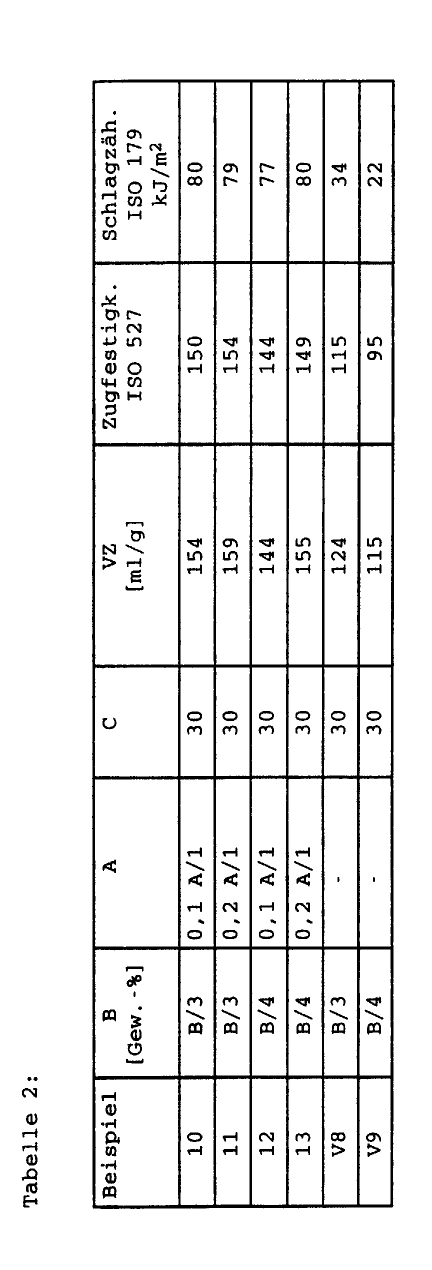

## Patentansprüche

1. Verwendung von Homo- oder Copolymeren A), aufgebaut aus
A₁) 40 - 100 Gew.-% Monomeren der allgemeinen Formel I 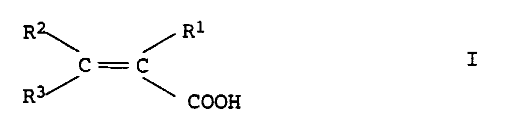
A₂) 0 - 60 Gew.-% Monomeren der allgemeinen Formel II 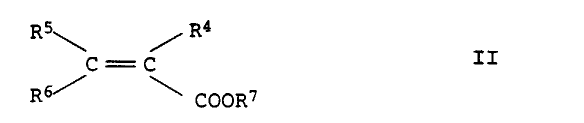 und
A₃) 0 - 10 Gew.-% weiteren radikalisch polymerisierbaren Monomeren,
wobei die Gewichtsprozente der Monomeren A₁) bis A₃) 100 % ergeben und die Substituenten folgende Bedeutung haben:
R¹,R⁴ gleiche oder verschiedene Reste Wasserstoff oder C₁ bis C₄ Alkyl,
R²,R³,R⁵, R⁶ gleiche oder verschiedene Reste Wasserstoff oder C₁- bis C₄-Alkyl,
mit der Maßgabe, daß mindestens zwei Reste aus der Gruppe R¹, R², R³ und der Gruppe R⁴, R⁵, R⁶ Wasserstoff sind,
R⁷ ein Alkyl-, Cycloalkyl-, Aryl- oder Aralkylrest bedeutet
als Verzweiger für Aminogruppen enthaltende thermoplastische Polymere.

2. Verwendung nach Anspruch 1, dadurch gekennzeichnet, daß die Aminogruppen enthaltenden thermoplastischen Polymeren ausgewählt sind aus der Gruppe der Polyamide, Polyurethane, Polyetheramide, Polyesteramide, Polyimide oder Polyamidimide.

3. Verwendung nach den Ansprüchen 1 und 2, wobei die Homo- oder Copolymeren A) aufgebaut sind aus
A₁) 80 - 100 Gew.-%
A₂) 0 - 20 Gew.-%

4. Verwendung nach den Ansprüchen 1 bis 3, wobei die Homo- oder Copolymeren A) ein mittleres Molgewicht von 4000 bis 200 000 g/mol aufweisen.

5. Thermoplastische Formmassen, enthaltend
| | | |
|---|---|---|
| A) | 0,01 - 1 Gew.-% | Homo- oder Copolymere gemäß Anspruch 1 |
| | | |
| B) | 20 - 99,99 Gew.-% | eines thermoplastischen Polyamids |
| | | |
| C) | 0 - 70 Gew.-% | weiterer Zusatzstoffe und Verarbeitungshilfsmittel, |
wobei die Summe der Gewichtsprozente der Komponenten A) bis C) 100 % ergibt.

6. Thermoplastische Formmassen nach Anspruch 5, in denen das thermoplastische Polyamid aus PA6, PA66, PA 6T/66, PA 6T/6 oder deren Mischungen aufgebaut ist.

7. Thermoplastische Formmassen nach den Ansprüchen 5 und 6, in denen das Polyamid B) eine Viskositätszahl VZ von 130 bis 300 ml/g aufweist.

8. Verfahren zur Herstellung von thermoplastischen Formmassen nach den Ansprüchen 5 bis 7, dadurch gekennzeichnet, daß man die Komponente A) der Schmelze der Komponente B) sowie gegebenenfalls C) zugibt.

9. Verfahren nach Anspruch 8, dadurch gekennzeichnet, daß die Komponente A) in Form einer wäßrigen Lösung oder Dispersion zur Schmelze der Komponente B) zugegeben wird.

10. Verfahren zur Herstellung von thermoplastischen Formmassen nach den Ansprüchen 5 bis 7, dadurch gekennzeichnet, daß man die Komponente A) auf ein Granulat der Komponente B) sowie gegebenenfalls C) aufträgt und anschließend in üblicher Weise konfektioniert.

11. Verwendung der thermoplastischen Formmassen gemäß den Ansprüchen 5 bis 7 zur Herstellung von Formkörpern durch Blasformen, Profilextrusion, Rohrextrusion, (sequentielle) Coextrusion und/oder Extrusion.

12. Coextrudate, Blasformkörper, Profilextrudate, Rohrextrudate, butzenarme dreidimensionale Extrudate, erhältlich aus den thermoplastischen Formmassen gemäß den Ansprüchen 5 bis 7.

## Claims

1. Use of homo- or copolymers A) composed of
A₁) 40 - 100 % by weight of monomers of the formula I 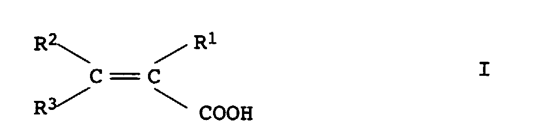
A₂) 0 - 60 % by weight of monomers of the formula II 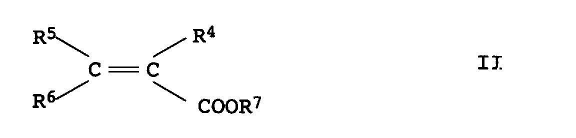 and
A₃) 0 - 10 % by weight of further monomers capable of free radical polymerization,
the percentages by weight of the monomers A₁) to A₃) summing to 100 % and
R¹ and R⁴ being identical or different radicals and each being hydrogen or C₁-C₄-alkyl,
R²,R³,R⁵,R⁶ being identical or different radicals and each being hydrogen or C₁-C₄-alkyl,
with the proviso that at least two radicals from the group consisting of R¹, R² and R³ and from the group consisting of R⁴, R⁵ and R⁶ are hydrogen, and
R⁷ is alkyl, cycloalkyl, aryl or aralkyl,
as branching agents for amino-containing thermoplastic polymers.

2. Use as claimed in claim 1, wherein the amino-containing thermoplastic polymers are selected from the group consisting of the polyamides, polyurethanes, polyetheramides, polyesteramides, polyimides and polyamidoimides.

3. Use as claimed in claims 1 and 2, wherein the homo- or copolymers A) are composed of
80 - 100 % by weight of A₁) and
0 - 20 % by weight of A₂).

4. Use as claimed in any of claims 1 to 3, wherein the homo- or copolymers A) have an average molecular weight of from 4000 to 200,000 g/mol.

5. A thermoplastic molding material containing
| | | |
|---|---|---|
| A) | 0.01 - 1 % by weight | of homo- or copolymers as claimed in claim 1, |
| | | |
| B) | 20 - 99.99 % by weight | of a thermoplastic polyamide and |
| | | |
| C) | 0 - 70 % by weight | of further additives and processing assistants, |
the sum of the percentages by weight of the components A) to C) being 100 %.

6. A thermoplastic molding material as claimed in claim 5, in which the thermoplastic polyamide is composed of PA6, PA66, PA 6T/66, PA 6T/6 or a mixture thereof.

7. A thermoplastic molding material as claimed in claims 5 and 6, in which the polyamide B) has a viscosity number VN of from 130 to 300 ml/g.

8. A process for the preparation of thermoplastic molding materials as claimed in any of claims 5 to 7, wherein the component A) is added to the melt of the component B) and, if required, C).

9. A process as claimed in claim 8, wherein the component A) is added in the form of an aqueous solution or dispersion to the melt of the component B).

10. A process for the preparation of thermoplastic molding materials as claimed in any of claims 5 to 7, wherein the component A) is applied to granules of the component B) and, if required, C) and compounding is then effected in a conventional manner.

11. Use of a thermoplastic molding material as claimed in any of claims 5 to 7 for the production of moldings by blow molding, profile extrusion, pipe extrusion, (sequential) coextrusion or extrusion.

12. A coextrudate, blow molded article, profile extrudate, pipe extrudate or three-dimensional extrudate having little pinch-off, obtainable from a thermoplastic molding material as claimed in any of claims 5 to 7.

## Revendications

1. Utilisation d'homopolymères ou de copolymères A), constitués de
A₁) 40 à 100% en poids de monomères de la formule générale I: 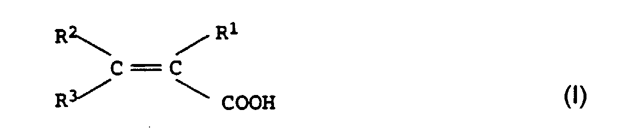
A₂) 0 à 60% en poids de monomères de la formule générale II: 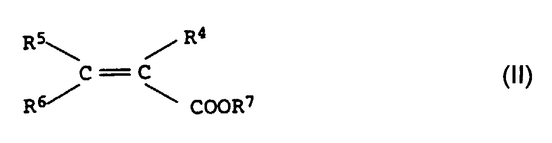 et
A₃) 0 à 10% en poids d'autres monomères polymérisables par voie radicalaire,
les pour-cent en poids des monomères A₁) à A₃) formant 100% et les substituants ayant les significations suivantes :
R¹, R⁴ radicaux identiques ou différents d'hydrogène ou d'alkyle en C₁ à C₄,
R²,R³,R⁵,R⁶ radicaux identiques ou différents d'hydrogène ou d'alkyle en C₁ à C₄,
à la condition qu'au moins deux radicaux du groupe R¹, R², R³ et du groupe R⁴, R⁵, R⁶ soient de l'hydrogène,
R⁷ un radical alkyle, cycloalkyle, aryle ou aralkyle,
comme agents de ramification pour des polymères thermoplastiques contenant des groupes amino.

2. Utilisation suivant la revendication 1, caractérisée en ce que les polymères thermoplastiques contenant des groupes amino sont choisis parmi le groupe des polyamides, des polyuréthannes, des polyétheramides, des polyesteramides, des polyimides ou des polyamidimides.

3. Utilisation suivant l'une des revendications 1 et 2, dans laquelle les homopolymères ou les copolymères A) sont constitués de
A₁) 80 à 100% en poids
A₂) 0 à 20% en poids

4. Utilisation suivant l'une des revendications 1 à 3, dans laquelle les homopolymères ou copolymères A) présentent un poids moléculaire moyen de 4000 à 200.000 g/mole.

5. Masses à mouler thermoplastiques, contenant
A) 0,01 à 1% en poids d'homopolymères ou de copolymères suivant la revendication 1,
B) 20 à 99,99% en poids d'un polyamide thermoplastique,
C) 0 à 70% en poids d'autres additifs et agents auxiliaires de traitement,
la somme des pour-cent en poids des composants A) à C) formant 100%.

6. Masses à mouler thermoplastiques suivant la revendication 5, dans lesquelles le polyamide thermoplastique est constitué de PA6, PA66, PA 6T/66, PA 6T/6 ou de leurs mélanges.

7. Masses à mouler thermoplastiques suivant l'une des revendications 5 et 6, dans lesquelles le polyamide B) présente un indice de viscosité IV de 130 à 300 ml/g.

8. Procédé de préparation de masses à mouler thermoplastiques suivant l'une des revendications 5 à 7, caractérisé en ce qu'on ajoute le composant A) à la masse fondue du composant B) ainsi qu'éventuellement C).

9. Procédé suivant la revendication 8, caractérisé en ce que le composant A) est ajouté sous la forme d'une solution ou dispersion aqueuse à la masse fondue du composant B).

10. Procédé de préparation de masses à mouler thermoplastiques suivant l'une des revendications 5 à 7, caractérisé en qu'on applique le composant A) sur un produit de granulation du composant B) ainsi qu'éventuellement C) et en ce qu'ensuite on effectue un confectionnement de manière courante.

11. Utilisation des masses à mouler thermoplastiques suivant l'une des revendications 5 à 7, pour la fabrication de corps de moulage par moulage par soufflage, extrusion de profilés, extrusion de tubes, coextrusion (séquentielle) et/ou extrusion.

12. Produits de coextrusion, corps de moulage par soufflage, produits d'extrusion profilés, produits d'extrusion tubulaires, produits d'extrusion tridimensionnels pauvres en bulles, que l'on peut obtenir à partir des masses à mouler thermoplastiques suivant l'une des revendications 5 à 7.
